# EUROPÄISCHE PATENTSCHRIFT

(11) **EP 2 759 089 B1**
(45) Veröffentlichungstag und Bekanntmachung des Hinweises auf die Patenterteilung: **10.04.2019**
(21) Anmeldenummer: 12772734.5
(22) Anmeldetag: 14.09.2012
(51) Int. Cl.: H04L 9/08

(54) **SYSTEM UND VERFAHREN ZUR SICHEREN SPONTANEN ÜBERMITTLUNG VERTRAULICHER DATEN ÜBER UNSICHERE VERBINDUNGEN UND VERMITTLUNGSRECHNER**
SYSTEM AND METHOD FOR THE SAFE SPONTANEOUS TRANSMISSION OF CONFIDENTIAL DATA OVER UNSECURE CONNECTIONS AND SWITCHING COMPUTERS
SYSTÈME ET PROCÉDÉ POUR LA TRANSMISSION SPONTANÉE SÉCURISÉE DE DONNÉES CONFIDENTIELLES PAR DES LIAISONS NON SÉCURISÉES ET UN PROCESSEUR DE COMMUTATION

(30) Priorität: 20.09.2011 DE 102011083062
(43) Veröffentlichungstag der Anmeldung: 30.07.2014
(73) Patentinhaber: Hoccer GmbH, 10179 Berlin (DE)
(72) Erfinder: MAYER, Pavel, 10435 Berlin (DE)
(74) Vertreter: Maikowski & Ninnemann Patentanwälte Partnerschaft mbB
(86) Internationale Anmeldenummer: PCT/EP2012/068115
(87) Internationale Veröffentlichungsnummer: WO 2013/041460

(56) Entgegenhaltungen:
- GB-A- 2 471 079
- US-A1- 2004 034 776
- US-A1- 2004 120 527
- US-A1- 2010 281 265

## Beschreibung

Es ist häufig wünschenswert, digitale Daten, insbesondere Aufzeichnungen wie Bilder, Filme, Tonaufnahmen oder schriftliche Daten wie Adressen, Texte, Kalendereinträge, Telefonnummern oder beliebige andere vertrauliche Daten spontan von einem ersten Kommunikationsendgerät eines ersten Teilnehmers zu einem zweiten Kommunikationsendgerät eines zweiten Teilnehmers zu übermitteln.

Die US 2010/0281265 A1 beschreibt ein Informationsverteilungssystem zur sicheren Speicherung von digitalisierten, personalisierten Informationen in einem verschlüsselten Zustand.

Die GB 2471079 A betrifft ein Verfahren zum Aufbau eines sicheren Verbindungsdatenstroms zwischen zwei entfernten Computern für den unmittelbaren und direkten Transfer einer verschlüsselten Datendatei.

Die Erfindung ist in den unabhängigen Ansprüchen angegeben. Ausgestaltungen sind in den Unteransprüchen angegeben.

Demnach ist insbesondere ein Verfahren zur Übertragung von Daten angegeben, mit mindestens einem ersten stationären und / oder mobilen Kommunikationsendgerät, mindestens einem weiteren zweiten Kommunikationsendgerät und einer von allen Kommunikationsendgeräten über ein Datennetzwerk erreichbaren Vermittlungseinheit. Dabei ist vorgesehen, dass die Kommunikationsendgeräte Daten an die Vermittlungseinheit oder einen Datenaustauschknoten senden, die mit einem symmetrischen Verschlüsselungsverfahren verschlüsselt sind, und den symmetrischen Schlüssel mit einem öffentlichen Schlüssel eines Schlüsselpaars verschlüsselt an die Vermittlungseinheit senden, damit diese ihn an andere Kommunikationsendgeräte versenden kann, die dann bei Besitz eines zugehörigen privaten Schlüssels in der Lage sind, auf bei der Vermittlungseinheit oder dem Datenaustauschknoten gespeicherte Informationen zuzugreifen und sie zu entschlüsseln, wobei die Vermittlungseinheit zu übertragende Informationen und/oder zugehörige Schlüssel selbständig an Empfänger versendet und die Vermittlungseinheit öffentliche Schlüssel zusammen mit einer als Hash daraus generierten ID speichert und den Schlüssel bei einer Anfrage nach dieser ID zurückgeben kann.

Im Folgenden wird ein effizientes Verfahren und ein effizientes System beschrieben, mit dem dies insbesondere für mobile Kommunikationsendgeräte "ad hoc", also ohne vorherigen wechselseitigen Austausch von Adressen auf der Grundlage von Ortungsdaten möglich ist.

Ausführungsformen werden beispielhaft anhand von Figuren erläutert. Es zeigen:

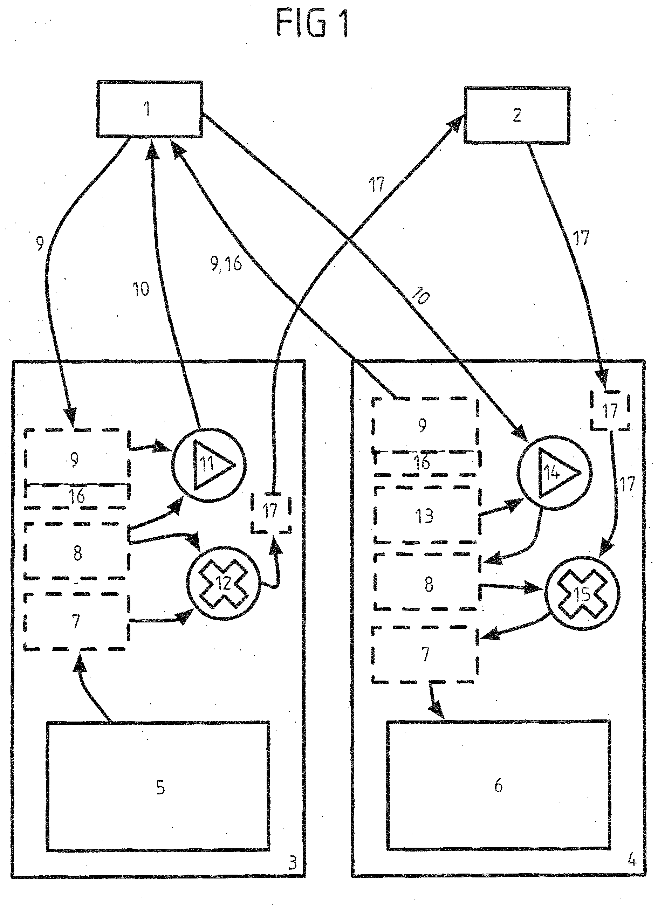

Fig. 1 eine schematische Darstellung einer Ausführungsform des Systems,

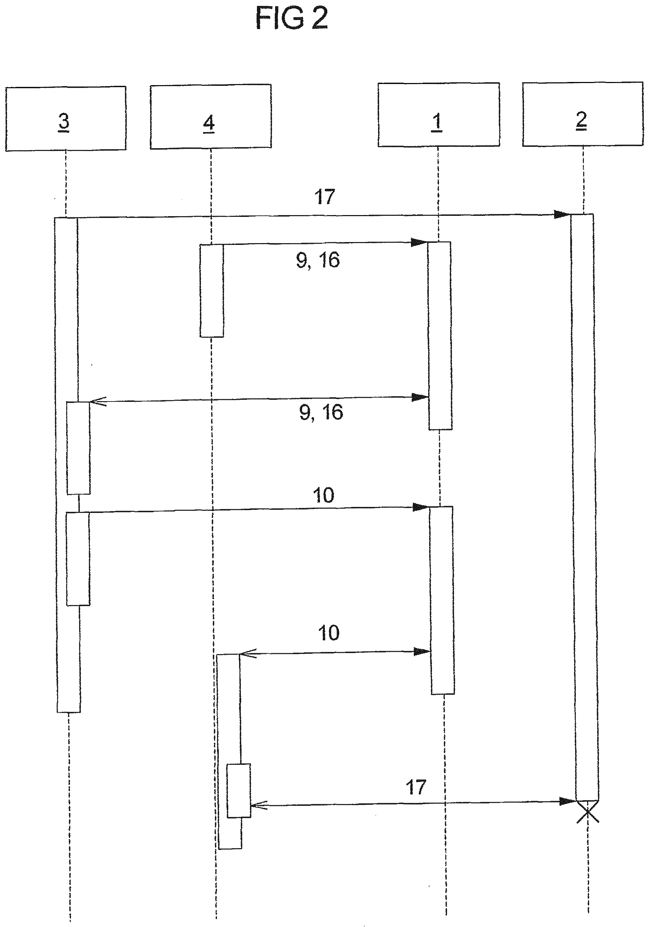

Fig. 2 eine Sequenzdarstellung einer Ausführungsform des Verfahrens,

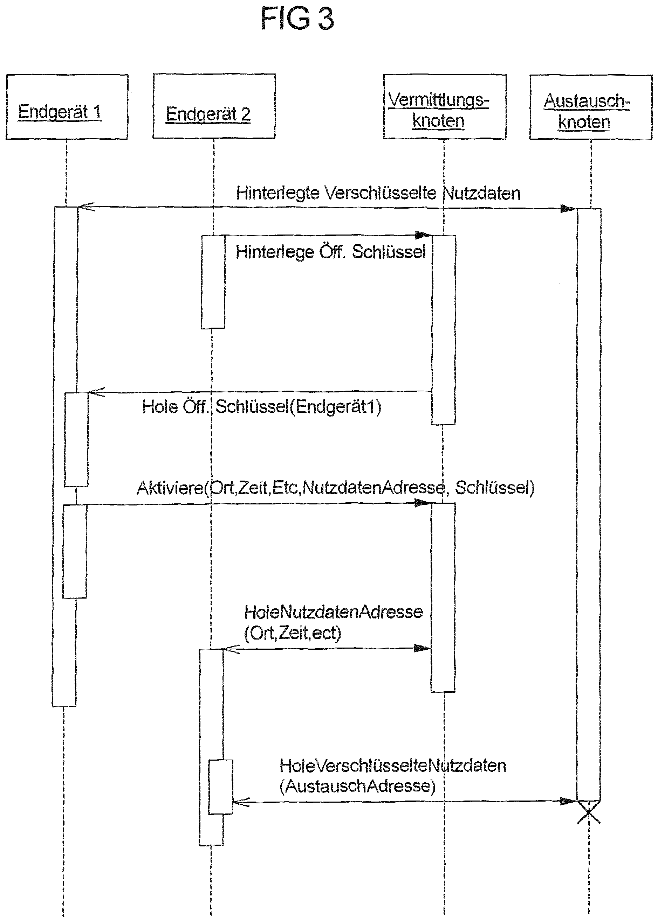

Fig. 3 eine andere Darstellung der Fig. 1;

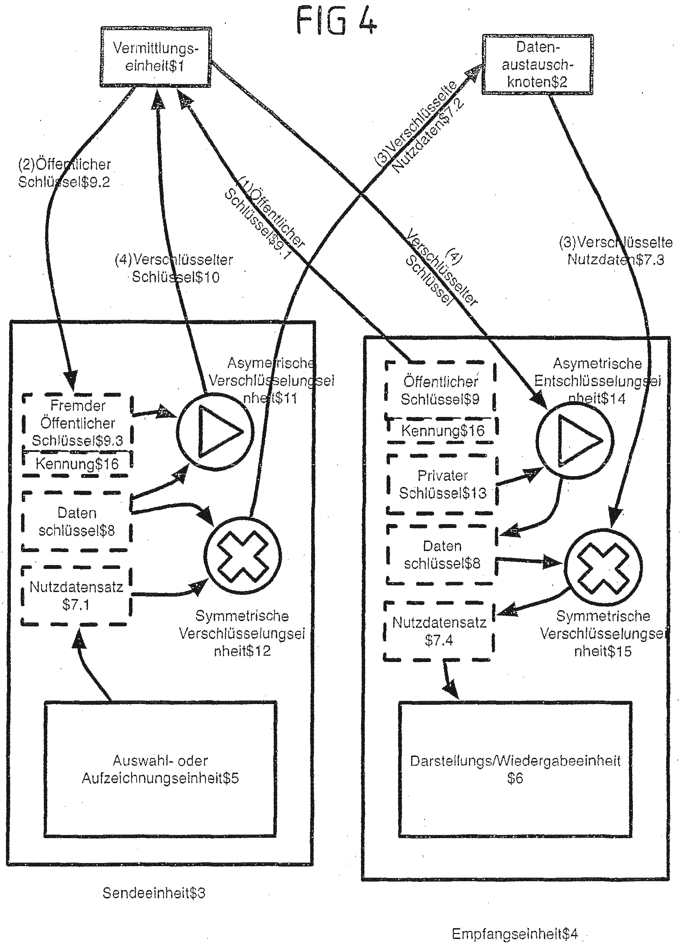

Fig. 4 eine andere Darstellung der Fig. 2.

Bevor auf Ausführungsbeispiele des Verfahrens und des Systems eingegangen wird, wird der technische Hintergrund erläutert.

Bei der Übertragung von Daten über ein Datenaustauschsystem (drahtlose oder drahtgebundene Datenübertragungsleitungen, Vermittlungsrechner etc.) tritt das Problem auf, dass die übertragenen Daten unter Umständen von Dritten abgehört oder eingesehen werden können. Für sichere Übertragungen im Internet wird als Stand der Technik eine sogenannte Transportverschlüsselung verwendet, bei der die Gegenstellen sich z.B. mittels des Diffie-Hellman-Verfahrens auf einen geheimen Schlüssel einigen.

Voraussetzung hierfür ist aber, dass Sender und Empfänger vor dem Aufbau der sicheren Verbindung gegenseitig Daten austauschen, was in bestimmten Anwendungsszenarien nicht möglich oder wünschenswert ist.

Bei einem System nach dem Stand der Technik werden vom Sender und Empfänger jeweils sichere Verbindungen zum Vermittlungs- und/oder Datenaustauschdienst aufgebaut, doch beim Betreiber des Dienstes werden die Daten unverschlüsselt zwischengespeichert und können vom Betreiber oder von Dritten eingesehen werden, wenn diese sich Zugang zum Vermittlungs- oder Datenaustauschdienst verschaffen.

Um Risiken für den Anwender und Betreiber zu minimieren, ist es wünschenswert, dass Daten vom Sender so verschlüsselt werden, dass nur der Empfänger sie entschlüsseln kann. Dies wird auch als Ende-zu-Ende-Verschlüsselung bezeichnet.

Eine Lösung nach dem Stand der Technik ist, dass der Sender die Daten mit einem geheimen Schlüssel verschlüsselt, den er dann dem Empfänger auf vertraulichem Weg mitteilt. Um das Problem der Übermittlung von Schlüsseln zu vereinfachen, gibt es seit vielen Jahren sogenannte asymmetrische Verschlüsselungsverfahren, die unten erläutert sind. Alle bisher in der Praxis verwendeten Systeme haben jedoch das Problem, dass der Nutzer Schlüssel erzeugen und verwalten muss, was zusätzlichen Aufwand erfordert, so dass aus Gründen der Bequemlichkeit häufig keine Verschlüsselung verwendet wird.

Sollen Informationen verschlüsselt übertragen werden, so dass sie nur die gewünschten Empfänger erreichen, ergeben sich bei einer indirekten Übertragung eine Reihe von Problemen daraus, dass
- die Daten zentral gespeichert werden
- der Empfängerkreis durch den Sender nicht in jedem Anwendungsszenario explizit kontrolliert werden kann
- es gegebenenfalls erwünscht ist, die Teilnehmer dem zentralen Dienst gegenüber "anonym" zu halten
- es insbesondere gegebenenfalls erwünscht ist, die Daten bereits vor Definition des Empfängerkreises zu übermitteln und zentral zu speichern.

Um Daten vor unberechtigtem Zugriff zu schützen, sind eine Vielzahl von Verschlüsselungsverfahren und Protokollen bekannt. Allgemein werden bei Verschlüsselung Daten, die auch als Klartext bezeichnet werden, durch mathematische Verfahren und einen geheimen Schlüssel in einen chiffrierten Text transformiert, der nur durch Kenntnis des richtigen Schlüssels wieder entschlüsselt, also in Klartext zurücktransformiert werden kann.

Dabei unterscheidet man zwischen symmetrischen Verfahren, bei denen zum Ver- und Entschlüsseln der gleiche Schlüssel verwendet wird, und asymmetrischen Verfahren, die zum Verschlüsseln einen anderen Schlüssel erfordern als zum Entschlüsseln.

Asymmetrische Verfahren ermöglichen es, den Schlüssel zum Verschlüsseln zu veröffentlichen und damit allgemein Nachrichten an einen Empfänger so zu verschlüsseln, dass nur der im Besitz des privaten Schlüssels befindliche Empfänger diese Nachricht entschlüsseln kann.

Bekannte und standardisierte symmetrische Verschlüsselungsverfahren sind beispielsweise DES und der Nachfolger AES, und als asymmetrische Verfahren kommen beispielsweise das auf Primzahlen basierende RSA-Verfahren und das auf elliptischen Kurven basierende EC-Verfahren zum Einsatz.

Das bekannte PGP (Pretty-Good-Privacy)-Verfahren wird eingesetzt, um beispielsweise elektronische Post zu verschlüsseln. Dabei benötigt der Sender den öffentlichen Schlüssel des Empfängers zum Verschlüsseln einer Nachricht, die nur durch einen zugehörigen im Besitz des Empfängers befindlichen privaten Schlüssel entschlüsselt werden kann. Bei PGP ist es jedoch erforderlich, dass der Sender vom Empfänger vorab den öffentlichen Schlüssel erhält, und im Gegensatz zum erfindungsgemäßen Verfahren muss beim Versand der Daten der Empfängerkreis vorbestimmt sein und von jedem Empfänger ein öffentlicher Schlüssel vorliegen.

Der sogenannte X.500-Standard der ITU definiert im Abschnitt X.509 ebenfalls ein Verfahren zum Austausch von Schlüsseln im Rahmen einer Adressverzeichnisinfrastruktur, die einen ähnlichen Zweck erfüllt wie im folgenden beschriebene Ausführungsformen. Bei X.509 ist es jedoch erforderlich, dass Schlüssel von einer höheren Instanz mit einer digitalen Signatur versehen werden, so dass Sender und Empfänger zusätzliche Zertifikate benötigen.

Das die im Folgenden beschriebenen Verfahren und Systeme können gegenüber Angriffen von vierter Seite sicherer gemacht werden, indem zusätzlich X.509 Transportverschlüsselung auf dem Weg zum Vermittlungsrechner genutzt wird. Mit vierter Seite ist ein Angreifer gemeint, der nicht zum Kreis von Sender, Empfänger und Systembetreiber gehört.

Im Folgenden wird ein Verfahren beschrieben, das eine Ende-zu-Ende-Verschlüsselung für ein System der wie oben beschriebenen spontanen Datenübertragung ermöglicht.

Ende-zu-Ende-Verschlüsselung bedeutet, dass auf dem Weg zwischen Sender und Empfänger die Daten nicht entschlüsselt werden, so dass auch der Systembetreiber keinen Zugriff auf die von den Nutzern übertragenen Daten hat. Im Gegensatz dazu steht die übliche Transportverschlüsselung auf Teilstrecken, bei der ein auf dem Transportweg befindliches System die Daten entschlüsselt und wieder neu verschlüsselt, so dass der Betreiber des Vermittlungssystems Zugriff auf die Daten im Klartext hat. Derartige Verfahren kommen beispielsweise beim sogenannten E-Postbrief oder DE-Mail zum Einsatz.

Ein weiteres bekanntes Verfahren, das einem ähnlichen Zweck wie das erfindungsgemäße Verfahren dient, ist das sogenannte "Off-The-Record-Messaging" oder OTR. Dieses führt jedoch einen Diffie-Hellmann Schlüsselaustausch durch und unterscheidet sich in seinen Merkmalen und Verfahren substanziell vom erfindungsgemäßen Verfahren.

Die hier beschriebenen Verfahren und Systeme ermöglichen es, den Schlüsselaustausch automatisch erfolgen zu lassen und die Daten verschlüsselt auf dem zentralen Dienst gespeichert werden können, auch wenn der Empfängerkreis noch nicht bekannt ist.

Eine Ausführungsform ist wie folgt aufgebaut:
Eine Vermittlungseinheit 1, ein Datenaustauschknoten 2, eine Sendeeinheit 3 und eine Empfangseinheit 4 sind räumlich getrennte Einheiten, die durch ein Netzwerk wie z.B. das Internet Daten austauschen können.

Die Sendeeinheit 3 weist eine Auswahl- oder Aufzeichnungseinheit 5, die es ermöglicht, Nutzdaten, die beispielsweise Texte oder Bilder repräsentieren, aus einem Speicher auszuwählen oder mit einer Kamera oder Tastatur aufzuzeichnen.

Diese Auswahl- oder Aufzeichnungseinheit 5 liefert einen Nutzdatensatz 7, der unter Verwendung eines Schlüsseldatensatzes 8 von einer symmetrischen Verschlüsselungseinheit 12 einen verschlüsselten Nutzdatensatz 17 erzeugt und über ein Netzwerk an den Datenaustauschknoten 2 übermittelt, wo der verschlüsselte Nutzdatensatz 17 zwischengespeichert wird.

Die Empfangseinheit 4 enthält ein Schlüsselpaar für asymmetrische Kryptographie, bestehend aus den öffentlichen Schlüssel 9 und dem privaten Schlüssel 13. Der öffentliche Schlüssel 9 wird zusammen mit einer eindeutigen Stationskennung 16 an eine Vermittlungseinheit 1 übertragen und dort zwischengespeichert.

Wenn von der Sendeeinheit 3 die bereits auf dem Datenaustauschknoten 2 abgelegten, verschlüsselten Nutzdaten 17 an die durch die Stationskennung 16 bezeichnete Empfangseinheit 4 übermittelt werden sollen, fordert die Sendeeinheit 3 zunächst bei der Vermittlungseinheit 1 den öffentlichen Schlüssel der Empfangseinheit 4 an.

Der fremde öffentliche Schlüssel 9 wird in der Sendeeinheit zwischengespeichert und dann verwendet, um den Datenschlüssel 8 mittels der asymmetrischen Verschlüsselungseinheit 11 einen verschlüsselten Datenschlüssel 10 zu erzeugen, der dann zusammen mit der Adresse der auf dem Datenaustauschknotens 2 liegenden verschlüsselten Nutzdaten 17 an die Vermittlungseinheit 1 übermittelt wird, von wo die verschlüsselten Nutzdaten von der Empfangseinheit 4 abgerufen werden.

In der Empfangseinheit 4 wird zunächst der verschlüsselte Datenschlüssel 10 unter Verwendung des privaten Schlüssels 13 von einer asymmetrischen Entschlüsselungseinheit 14 entschlüsselt, so dass nunmehr auch in der Empfangseinheit 4 der Datenschlüssel 8 vorliegt.

Unter Verwendung des Datenschlüssels 8 wird nun von der symmetrischen Entschlüsselungseinheit 15 der entschlüsselte Nutzdatensatz 7 erzeugt, der dann von der Darstellungs- und Wiedergabeeinheit 6 in der Empfangseinheit 4 dem Nutzer präsentiert wird.

Bei der Darstellungs- und Wiedergabeeinheit 6 handelt es sich beispielsweise um ein Display oder einen Lautsprecher in Kombination mit einer Elektronik, die anhand der Nutzdaten 7 das Display oder den Lautsprecher derart ansteuert, dass eine bildhafte Repräsentation oder hörbare Ausgabe der Nutzdaten 7 erfolgt.

Für den Betreiber des Vermittlungsdienstes 1, des Austauschdienstes 2, alle anderen potentiellen Empfänger und jeden anderen möglichen Mitleser des Datenverkehrs ist eine Entschlüsselung der Nutzdaten 7 praktisch nicht möglich, wenn nach dem Stand der Technik sichere Verschlüsselungsverfahren mit hinreichenden zufälligen Schlüsseln ausreichender Länge verwendet werden und der private Schlüssel 13 in der Empfangseinheit 4 sicher verwahrt wird.

Ein wesentlicher Unterschied zu existierenden Verfahren wie PGP, bei denen Inhalte mit einem symmetrischen Schlüssel verschlüsselt werden und zusammen mit dem asymmetrisch verschlüsselten symmetrischen Schlüssel übertragen werden, besteht hierbei darin, dass Inhalt und Schlüssel voneinander getrennt und separat gespeichert bzw. verschickt werden, so dass das Hochladen von verschlüsselten Daten auf den zentralen Dienst bereits vor Auswahl bzw. Definition des Empfängers möglich ist.

Um Daten verschlüsselt an mehrere Empfänger zu verschicken, wird das beschriebene Verfahren so erweitert, dass der Sender mehrere mit unterschiedlichen öffentlichen Schlüsseln verschlüsselte Kopien des symmetrischen Schlüssel zusammen versendet und jeder Empfänger den von ihm entschlüsselbaren Teil identifiziert und zur Entschlüsselung der Nutzdaten verwendet.

Paare von öffentlichen Schlüsseln und zugehörigen Schlüssel- bzw. Benutzer-IDs können von Teilnehmern lokal gespeichert werden, um bei mehrmaligen verschlüsselten Datenübertragungen mit den gleichen Empfängern nicht den gleichen Schlüssel jedes Mal vom Empfänger oder dem zentralen Dienst erfragen zu müssen.

Das beschriebene Verfahren lässt sich verwenden, ohne dass Teilnehmer zwingend eine über eine einzelne Transaktion hinaus bestehende Identität aufrecht erhalten müssen. Insbesondere kann das verwendete Schlüsselpaar ohne weiteres jederzeit geändert werden.

## Patentansprüche

1. Verfahren zur Übertragung von Daten, mit
a) mindestens einem ersten stationären und / oder mobilen Kommunikationsendgerät (3, 4),
b) mindestens einem weiteren zweiten Kommunikationsendgerät (3, 4),
c) einer von allen Kommunikationsendgeräten (3, 4) über ein Datennetzwerk erreichbaren Vermittlungseinheit (1),
**dadurch gekennzeichnet, dass**
d) die Kommunikationsendgeräte (3, 4) Daten an die Vermittlungseinheit (1) oder einen Datenaustauschknoten (2) senden, die mit einem symmetrischen Verschlüsselungsverfahren verschlüsselt sind, und
e) den symmetrischen Schlüssel mit einem öffentlichen Schlüssel (9) eines Schlüsselpaars verschlüsselt an die Vermittlungseinheit (1) senden, damit diese ihn an andere Kommunikationsendgeräte (3, 4) versenden kann,
f) die dann bei Besitz eines zugehörigen privaten Schlüssels in der Lage sind, auf bei der Vermittlungseinheit (1) oder dem Datenaustauschknoten (2) gespeicherte Informationen zuzugreifen und sie zu entschlüsseln, wobei
g) die Vermittlungseinheit (1) zu übertragende Informationen und/oder zugehörige Schlüssel selbständig an Empfänger (4) versendet und
h) die Vermittlungseinheit (1) öffentliche Schlüssel (9) zusammen mit einer als Hash daraus generierten ID speichert und den Schlüssel bei einer Anfrage nach dieser ID zurückgeben kann.

2. Verfahren nach Anspruch 1, **dadurch gekennzeichnet, dass** Informationen gleichzeitig an mehrere Empfänger (4) geschickt werden, wobei mehrere Kopien des symmetrischen Schlüssels mit unterschiedlichen öffentlichen Schlüsseln (9) verschlüsselt zusammen verschickt werden.

3. Verfahren nach Anspruch 1 oder 2, **dadurch gekennzeichnet, dass** ein Kommunikationsendgerät (3, 4) zu übertragende Informationen bereits vor Auswahl der zur Verschlüsselung zu verwendenden öffentlichen Schlüssel (9) in symmetrisch verschlüsselter Form an die Vermittlungseinheit (1) schickt.

4. Verfahren nach mindestens einem der vorhergehenden Ansprüche, **dadurch gekennzeichnet, dass** der Empfängerkreis einer Datenübertragung durch die Vermittlungseinheit (1) auf Grundlage von den Kommunikationsendgeräten (3, 4) gesendeter Informationen definiert wird.

5. Verfahren nach einem der vorhergehenden Ansprüche, **dadurch gekennzeichnet, dass** die Kommunikationsendgeräte (3, 4) in der Lage sind, öffentliche Schlüssel (9) direkt untereinander auszutauschen.

6. Verfahren nach einem der vorhergehenden Ansprüche, **dadurch gekennzeichnet, dass** öffentliche Schlüssel (9) von den Kommunikationsendgeräten (3, 4) bei der Vermittlungseinheit (1) hinterlegt und von dort abrufbar sind.

7. Verfahren nach Anspruch 5, **dadurch gekennzeichnet, dass** ein Kommunikationsendgerät (3, 4) potentielle Empfänger bei der Vermittlungseinheit (1) erfragen kann und dabei gespeicherte öffentliche Schlüssel (9) bzw. zugehörige IDs von der Vermittlungseinheit (1) an das Endgerät (4) übermittelt werden können.

8. Verfahren nach einem der vorhergehenden Ansprüche, **dadurch gekennzeichnet, dass** Kommunikationsendgeräte (3, 4) ihr Schlüsselpaar durch einen manuellen Eingriff oder automatisch in bestimmten zeitlichen Abständen, nach jeder Transaktion, bei jedem Neustart oder beim Eintritt anderer definierter Ereignisse ändern können.

9. Verfahren nach einem der vorhergehenden Ansprüche, **dadurch gekennzeichnet, dass** Endgeräte (3, 4) öffentliche Schlüssel (9) bzw. eine Zuordnung von Schlüsseln und IDs lokal über eine einzelne Transaktion hinaus speichern können.

10. Verfahren nach einem der vorhergehenden Ansprüche, **dadurch gekennzeichnet, dass** die Verschlüsselung für einen vom Kommunikationsendgerät (3, 4) und / oder der Vermittlungseinheit (1) definierten Kreis von Endgeräten (3, 4) bzw. öffentlichen Schlüsseln (9) auf dem Endgerät (3, 4) automatisch erfolgen kann.

11. Verfahren nach einem der vorhergehenden Ansprüche, **dadurch gekennzeichnet, dass** die zur Verschlüsselung oder Entschlüsselung benötigte Funktionalität in Form von JavaScript-Code durch Laden einer Internetseite bereitgestellt wird.

12. Verfahren nach mindestens einem der vorhergehenden Ansprüche, **gekennzeichnet durch,** eine Sendeeinheit (3) mit einer Auswahl- oder Aufzeichnungseinheit (5), die es ermöglicht, Nutzdaten, die beispielsweise Texte oder Bilder repräsentieren, aus einem Speicher auszuwählen oder mit einer Kamera oder Tastatur aufzuzeichnen.

13. System zur Übertragung von Daten, insbesondere zur Ausführung eines der Verfahren gemäß der Ansprüche 1 bis 12 mit
a) mindestens einem ersten stationären und / oder mobilen Kommunikationsendgerät (3, 4),
b) mindestens einem weiteren zweiten Kommunikationsendgerät (3, 4),
c) einer von allen Kommunikationsendgeräten (3, 4) über ein Datennetzwerk erreichbaren Vermittlungseinheit (1),
**dadurch gekennzeichnet, dass**
die Vermittlungseinheit (1) zu übertragende Informationen und/oder zugehörige Schlüssel selbständig an Empfänger (4) versendet und die Vermittlungseinheit (1) öffentliche Schlüssel (9) zusammen mit einer als Hash daraus generierten ID speichert und den Schlüssel bei einer Anfrage nach dieser ID zurückgeben kann, wobei das System ferner umfasst:
d) ein Kommunikationsendgerät (3, 4) mit einem Mittel zur Übertragung von Daten an die Vermittlungseinheit (1) oder einen Datenaustauschknoten (2), die mit einem symmetrischen Verschlüsselungsverfahren verschlüsselt sind, und
e) ein Mittel zum Senden des symmetrischen Schlüssels mit einem öffentlichen Schlüssel (9) eines Schlüsselpaars verschlüsselt an die Vermittlungseinheit (1),
f) damit diese ihn an andere Kommunikationsendgeräte (3, 4) versenden kann, die dann bei Besitz des zugehörigen privaten Schlüssels in der Lage sind, auf bei der Vermittlungseinheit (1) oder dem Datenaustauschknoten (2) gespeicherte Informationen zuzugreifen und sie zu entschlüsseln.

## Claims

1. Method for transmitting data, using
a) at least one first fixed and/or mobile communication terminal (3, 4),
b) at least one further second communication terminal (3, 4),
c) a switching unit (1) available to all communication terminals (3, 4) via a data network,
**characterized in that**
d) the communication terminals (3, 4) send data encrypted using a symmetrical encryption method to the switching unit (1) or to a data interchange node (2), and
e) send the symmetrical key encrypted using a public key (9) of a key pair to the switching unit (1) so that the latter can send it to other communication terminals (3, 4),
f) which, if in possession of an associated private key, are then able to access and decrypt information stored on the switching unit (1) or the data interchange node (2), wherein
g) the switching unit (1) independently sends information to be transmitted and/or associated keys to receivers (4), and
h) the switching unit (1) stores public keys (9) together with an ID generated therefrom as a hash and can return the key in the event of a request for this ID.

2. Method according to Claim 1, **characterized in that** information is sent to multiple receivers (4) at the same time, wherein multiple copies of the symmetrical key encrypted using different public keys (9) are sent together.

3. Method according to Claim 1 or 2, **characterized in that** a communication terminal (3, 4) sends information to be transmitted to the switching unit (1) in symmetrically encrypted form even before the public key (9) to be used for encryption is selected.

4. Method according to at least one of the preceding claims, **characterized in that** the group of receivers for a data transmission is defined by the switching unit (1) on the basis of information sent to the communication terminals (3, 4).

5. Method according to one of the preceding claims, **characterized in that** the communication terminals (3, 4) are able to interchange public keys (9) among one another directly.

6. Method according to one of the preceding claims, **characterized in that** public keys (9) are stored on and retrievable from the switching unit (1) by the communication terminals (3, 4).

7. Method according to Claim 5, **characterized in that** a communication terminal (3, 4) can obtain potential receivers from the switching unit (1) and public keys (9) stored thereon and associated IDs can be transmitted from the switching unit (1) to the terminal (4).

8. Method according to one of the preceding claims, **characterized in that** communication terminals (3, 4) can change their key pair by means of manual intervention or automatically at particular intervals of time, after every transaction, on every restart or when other defined events occur.

9. Method according to one of the preceding claims, **characterized in that** terminals (3, 4) can store public keys (9) or an association of keys and IDs locally beyond a single transaction.

10. Method according to one of the preceding claims, **characterized in that** the encryption for a group of terminals (3, 4) or public keys (9) that is defined by the communication terminal (3, 4) and/or the switching unit (1) can be effected on the terminal (3, 4) automatically.

11. Method according to one of the preceding claims, **characterized in that** the functionality required for encryption or decryption is provided in the form of JavaScript code by loading an internet page.

12. Method according to at least one of the preceding claims, **characterized by** a transmission unit (3) having a selection or recording unit (5) that allows useful data, for example representing text or images, to be selected from a memory or recorded using a camera or keyboard.

13. System for transmitting data, in particular for carrying out one of the methods according to Claims 1 to 12, having
a) at least one first fixed and/or mobile communication terminal (3, 4),
b) at least one further second communication terminal (3, 4),
c) a switching unit (1) available to all communication terminals (3, 4) via a data network,
**characterized in that**
the switching unit (1) independently sends information to be transmitted and/or associated keys to receivers (4), and the switching unit (1) stores public keys (9) together with an ID generated therefrom as a hash and can return the key in the event of a request for this ID, wherein the system further comprises:
d) a communication terminal (3, 4) having a means for transmitting data encrypted using a symmetrical encryption method to the switching unit (1) or to a data interchange node (2), and
e) a means for sending the symmetrical key encrypted using a public key (9) of a key pair to the switching unit (1),
f) so that the latter can send it to other communication terminals (3, 4), which, if in possession of the associated private key, are then able to access and decrypt information stored on the switching unit (1) or the data interchange node (2).

## Revendications

1. Procédé pour le transfert de données, avec
a) au moins un premier appareil terminal de communication stationnaire et/ou mobile (3, 4),
b) au moins un autre deuxième appareil terminal de communication (3, 4),
c) une unité de commutation (1) joignable par tous les appareils terminaux de communication (3, 4) par le biais d'un réseau de données,
**caractérisé en ce que**
d) les appareils terminaux de communication (3, 4) émettent des données vers l'unité de commutation (1) ou vers un noeud d'échange de données (2), qui sont chiffrées avec un procédé de chiffrement symétrique, et
e) émettent la clé symétrique avec une clé publique (9) d'une paire de clés de manière chiffrée vers l'unité de commutation (1) afin que celle-ci puisse l'envoyer vers d'autres appareils terminaux de communication (3, 4),
f) qui ensuite sont en mesure, en cas de possession d'une clé privée associée, d'accéder à des informations stockées au niveau de l'unité de commutation (1) ou du noeud d'échange de données (2) et de les déchiffrer, dans lequel
g) l'unité de commutation (1) envoie de manière autonome vers des destinataires (4) des informations à transférer et/ou des clés associées et
h) l'unité de commutation (1) stocke des clés publiques (9) conjointement avec un ID généré à partir de celles-ci en tant que valeur de hachage et peut redonner la clé en cas de demande de cet ID.

2. Procédé selon la revendication 1, **caractérisé en ce que** des informations sont envoyées simultanément à plusieurs destinataires (4), dans lequel plusieurs copies de la clé symétrique sont envoyées conjointement de manière chiffrée avec différentes clés publiques (9).

3. Procédé selon la revendication 1 ou 2, **caractérisé en ce qu'**un appareil terminal de communication (3, 4) envoie des informations à transférer déjà avant une sélection des clés publiques (9) à employer pour le chiffrement sous une forme chiffrée de manière symétrique à l'unité de commutation (1)

4. Procédé selon au moins une quelconque des revendications précédentes, **caractérisé en ce que** le cercle de destinataires d'un transfert de données est défini par l'unité de commutation (1) sur la base d'informations émises par les appareils terminaux de communication (3, 4).

5. Procédé selon l'une quelconque des revendications précédentes, **caractérisé en ce que** les appareils terminaux de communication (3, 4) sont en mesure d'échanger directement entre eux des clés publiques (9).

6. Procédé selon l'une quelconque des revendications précédentes, **caractérisé en ce que** des clés publiques (9) sont déposées par les appareils terminaux de communication (3, 4) au niveau de l'unité de commutation (1) et peuvent être appelées depuis celle-ci.

7. Procédé selon la revendication 5, **caractérisé en ce qu'**un appareil terminal de communication (3, 4) peut demander des destinataires potentiels auprès de l'unité de commutation (1), et des clés publiques (9) ou des ID associés stockés à cette occasion peuvent être transmis par l'unité de commutation (1) à l'appareil terminal (4).

8. Procédé selon l'une quelconque des revendications précédentes, **caractérisé en ce que** des appareils terminaux de communication (3, 4) peuvent modifier leur paire de clés par une intervention manuelle ou de manière automatique à certains intervalles de temps, après chaque transaction, à chaque nouveau démarrage ou en cas d'apparition d'autres événements définis.

9. Procédé selon l'une quelconque des revendications précédentes, **caractérisé en ce que** des appareils terminaux (3, 4) peuvent stocker des clés publiques (9) ou une association de clés et d'ID de manière locale avec plus d'une seule transaction.

10. Procédé selon l'une quelconque des revendications précédentes, **caractérisé en ce que** le chiffrement pour un cercle d'appareils terminaux de communication (3, 4) ou de clés publiques (9), défini par l'appareil terminal de communication (3, 4) et/ou l'unité de commutation (1), peut avoir lieu automatiquement sur l'appareil terminal (3, 4).

11. Procédé selon l'une quelconque des revendications précédentes, **caractérisé en ce que** la fonctionnalité nécessaire pour le chiffrement ou le déchiffrement est mise à disposition sous forme de code JavaScript par chargement d'une page Internet.

12. Procédé selon au moins une des revendications précédentes, **caractérisé par** une unité d'émission (3) avec une unité de sélection ou d'enregistrement (5), qui rend possible de sélectionner des données utiles, qui représentent par exemple des textes ou des images, à partir d'un dispositif de stockage ou de les enregistrer avec une caméra ou un clavier.

13. Système de transfert de données, en particulier pour l'exécution d'un des procédés selon les revendications 1 à 12 avec
a) au moins un premier appareil terminal de communication stationnaire et/ou mobile (3, 4),
b) au moins un autre deuxième appareil terminal de communication (3, 4),
c) une unité de commutation (1) joignable par tous les appareils terminaux de communication (3, 4) par le biais d'un réseau de données,
**caractérisé en ce que**
l'unité de commutation (1) envoie des informations à transférer et/ou des clés associées de manière autonome vers des destinataires (4) et l'unité de commutation (1) stocke des clés publiques (9) conjointement avec un ID généré à partir de celles-ci en tant que valeur de hachage et peut redonner la clé en cas de demande de cet ID, dans lequel le système comporte en outre :
d) un appareil terminal de communication (3, 4) avec un moyen pour le transfert de données à l'unité de commutation (1) ou à un noeud d'échange de données (2), qui sont chiffrées avec un procédé de chiffrement symétrique, et
e) un moyen pour émettre la clé symétrique avec une clé publique (9) d'une paire de clés de manière chiffrée vers l'unité de commutation (1),
f) afin que cette unité de commutation puisse l'envoyer vers d'autres appareils terminaux de communication (3, 4) qui ensuite sont en mesure, en cas de possession de la clé privée associée, d'accéder à des informations stockées au niveau de l'unité de commutation (1) ou du noeud d'échange de données (2) et de les déchiffrer.
